# FASCICULE DE BREVET EUROPEEN

(11) **EP 1 917 889 B1**
(45) Date de publication et mention de la délivrance du brevet: **17.03.2010**
(21) Numéro de dépôt: 07356150.8
(22) Date de dépôt: 22.10.2007
(51) Int. Cl.: A47J 19/02, A47J 43/14

(54) **Accessoire combinant un dispositif presse-agrumes et un dispositif pour séparer le blanc et le jaune d'oeuf cru**
Zubehörteil, das eine Kombination aus einer Zitruspresse und einer Vorrichtung zum Trennen von Eiweiß und Eigelb roher Eier darstellt
Accessory combining a juice extractor and a device for separating the yolk from the white of a raw egg

(30) Priorité: 02.11.2006 FR 0609591
(43) Date de publication de la demande: 07.05.2008
(73) Titulaire: SEB S.A., 69130 Ecully (FR)
(72) Inventeur: Renaudin, Florent, 53810 Change (FR); Rouland, Alain, 53700 Villaines la Juhel (FR); Maunoury, Damien, 53100 Moulay (FR)
(74) Mandataire: Kiehl, Hubert

(56) Documents cités:
- DE-B- 1 084 457
- GB-A- 537 090
- GB-A- 866 138
- GB-A- 191 311 435
- US-A- 2 057 227

## Description

La présente invention se rapporte à un accessoire combinant un dispositif presse-agrumes et un dispositif pour séparer le blanc et le jaune d'oeuf cru et se rapporte notamment à un tel accessoire prévu pour être utilisé sur un couvercle de récipient de travail d'un appareil électroménager de préparation culinaire de type blender.

Il est connu, du document GB 866 138, un couvercle de récipient blender comportant une cavité centrale pour séparer le blanc et le jaune d'oeuf cru, cette cavité pouvant être recouverte d'un cône presse-agrumes, la zone du couvercle autour de la cavité comportant une série de fentes permettant au jus de s'écouler vers l'intérieur du récipient.

Un tel couvercle présente cependant l'inconvénient de ne pas être étanche, les fentes laissant passer les projections d'aliments provoquées par la rotation de l'outil rotatif lorsque le couvercle est utilisé sur un récipient d'appareil blender. De plus, un tel couvercle est relativement complexe à fabriquer et la fonction presse-agrumes ou séparateur du blanc d'oeuf du couvercle ne peut être utilisée que sur un récipient comportant un diamètre adapté au diamètre du couvercle.

Aussi, un but de la présente invention est de remédier à ces inconvénients en proposant un accessoire amovible combinant un dispositif presse-agrumes et un dispositif pour séparer le blanc et le jaune d'oeuf cru qui puisse être utilisé indifféremment sur différents types de couvercles d'appareils électroménagers. Un autre but de la présente invention est de proposer un accessoire adaptable sur une ouverture du couvercle, permettant de conserver un couvercle simple à fabriquer et pouvant facilement être maintenu étanche.

A cet effet, l'invention a pour objet un accessoire combinant un dispositif presse-agrumes et un dispositif pour séparer le blanc et le jaune d'oeuf cru, l'accessoire étant prévu pour être utilisé au dessus d'un récipient de travail et comportant un cône presse-agrumes monté de manière amovible sur une coupelle pour collecter le jus, la coupelle comportant une cavité dont le fond est muni d'ouvertures présentant une forme adaptée pour retenir le jaune et laisser s'écouler le blanc d'un oeuf, sorti de sa coquille, qui serait renversé dans la cavité, caractérisé en ce que la coupelle présente une forme adaptée pour que le jus collecté par la coupelle lors du pressage d'un agrume s'écoule dans la cavité de séparation du blanc et du jaune d'oeuf, les ouvertures présentes dans le fond de la cavité permettant l'écoulement du jus vers le récipient de travail.

Selon une autre caractéristique de l'invention, l'accessoire est destiné à être disposé sur un couvercle de fermeture du récipient de travail comportant une ouverture dans laquelle la cavité de la coupelle peut être introduite de sorte que la coupelle repose sur les bords de l'ouverture.

Selon une autre caractéristique de l'invention, le cône presse-agrumes est disposé au dessus de la cavité et vient masquer cette dernière.

Selon une autre caractéristique de l'invention, la coupelle pour collecter le jus comporte une paroi collectrice s'étendant en bordure du bord supérieur de la cavité et convergeant vers la cavité.

Selon encore une autre caractéristique de l'invention, la paroi collectrice comporte des excroissances latérales formant des poignées facilitant la préhension de l'accessoire.

Selon encore une autre caractéristique de l'invention, le cône presse-agrumes comporte des doigts de verrouillages qui s'engagent de manière élastique dans des logements prévus sur la coupelle.

Selon encore une autre caractéristique de l'invention, le cône comporte des ouvertures s'étendant au moins partiellement sur la base du cône de manière à favoriser l'écoulement du jus vers la cavité.

Selon encore une autre caractéristique de l'invention, le cône presse-agrumes comporte une collerette partant de la base du cône et s'étendant radialement à l'axe du cône, cette collerette servant de butée axiale en prenant appui sur la paroi de la coupelle en bordure de la cavité lorsqu'un agrume est pressé sur le cône.

Selon encore une autre caractéristique de l'invention, la collerette est munie d'orifices.

Selon encore une autre caractéristique de l'invention, les ouvertures sont disposées au fond de la cavité en bordure d'un disque concave formant un creux de récupération du jaune d'oeuf.

Selon encore une autre caractéristique de l'invention, les ouvertures sont constituées par des ouvertures circulaires en alternance avec des ouvertures de forme oblongue.

L'invention concerne également un appareil électroménager de préparation culinaire de type blender comportant un récipient de travail dont le fond comprend un outil entraîné en rotation par un moteur, le récipient étant fermé par un couvercle comportant une ouverture, caractérisé en ce qu'il comporte un accessoire tel que précédemment décrit.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue générale en perspective d'un accessoire selon un mode particulier de réalisation de l'invention lorsque le cône presse-agrumes est monté sur la coupelle permettant de collecter le jus ou séparer le blanc du jaune d'oeuf cru;
- la figure 2 est une vue de côté de l'accessoire de la figure 1 lorsque le cône presse-agrumes est retiré de la coupelle ;
- la figure 3 est une vue de dessus de l'accessoire de la figure 1 ;
- la figure 4 est une vue de dessus de la coupelle représentée seule ;
- les figures 5 et 6 sont des vues en coupe selon respectivement les lignes V-V et VI-VI de la figure 4 ;
- la figure 7 est une vue en perspective du montage de la coupelle de l'accessoire sur un couvercle de récipient blender ;
- la figure 7a est une vue en perspective d'un bouchon de fermeture de l'ouverture centrale du couvercle ;
- la figure 8 représente un appareil blender muni d'un accessoire selon l'invention.

Seuls les éléments nécessaires à la compréhension de l'invention ont été représentés. Pour faciliter la lecture des dessins les mêmes éléments portent les mêmes références d'une figure à l'autre.

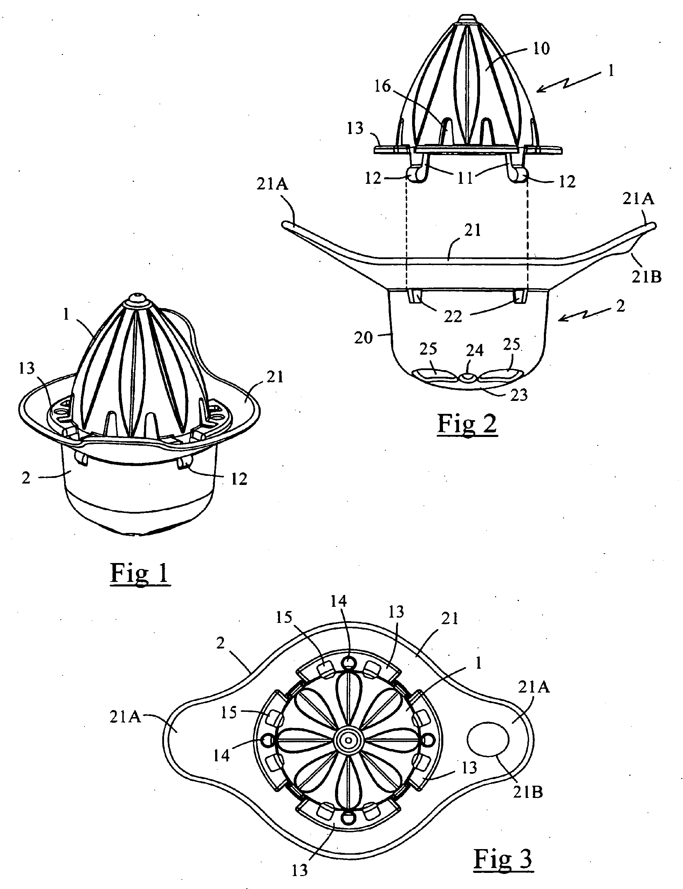

Les figures 1 à 6 représentent un accessoire combinant un dispositif presse-agrumes et un dispositif pour séparer le blanc et le jaune d'oeuf cru.

Conformément à ces figures, l'accessoire comporte un cône 1 presse-agrumes monté sur une coupelle 2 pour collecter le jus, cette dernière comportant une cavité centrale 20, présentant avantageusement un diamètre de l'ordre de 50 mm, dont l'extrémité supérieure se prolonge par une paroi collectrice 21 convergeant vers la cavité centrale 20.

La paroi collectrice 21 est avantageusement constituée par une bande périphérique sensiblement conique, d'une largeur de l'ordre de 20 mm, qui présente deux excroissances latérales 21 A disposées symétriquement par rapport au centre de la cavité 20 et formant des poignées de préhension, la coupelle 2 s'étendant sur une longueur de l'ordre de 130 mm au niveau de ces excroissances 21A. De manière avantageuse, au moins l'une des excroissances latérales comporte une cavité 21 B dont le volume est calibrée pour servir de cuillère de dosage, par exemple pour mesurer la quantité adéquate d'épice à verser pour la réalisation d'un cocktail particulier.

Conformément à la figure 2, le cône 1 presse-agrumes comporte, de manière connue en soi, une surface externe munie de nervures en relief 10 favorisant l'extraction du jus.

Le cône 1 est monté de manière amovible sur la coupelle 2 et comporte, à cet effet, des doigts de verrouillage 11 s'étendant en dessous du cône 1. Ces doigts de verrouillage 11 comportent des bossages 12 venant s'engager élastiquement dans des ouvertures 22 formées à l'extrémité supérieure de la cavité 20.

La base du cône 1 presse-agrumes comporte une grille de filtration 13 constituée par une collerette s'étendant radialement à l'axe du cône 1 et venant buter contre la paroi collectrice 21 lorsque le cône 1 est monté sur la coupelle 2. Cette grille de filtration 13, ainsi que la partie conique du cône 1, comportent des ouvertures 14, 15 permettant le passage, vers l'intérieur de la cavité 20, du jus s'écoulant le long de la partie conique ou le long de la paroi collectrice 21. De manière avantageuse, ces ouvertures 14, 15 sont constituées par des ouvertures circulaires 14 d'un diamètre de l'ordre de 5 mm formées sur la collerette et par des ouvertures 15 présentant une partie rectangulaire, d'une largeur de l'ordre de 5 mm, s'étendant sur la grille 13 et se prolongeant par une partie sensiblement triangulaire 16 s'étendant sur la partie inférieure du cône 1, sur une hauteur de l'ordre de 10 mm.

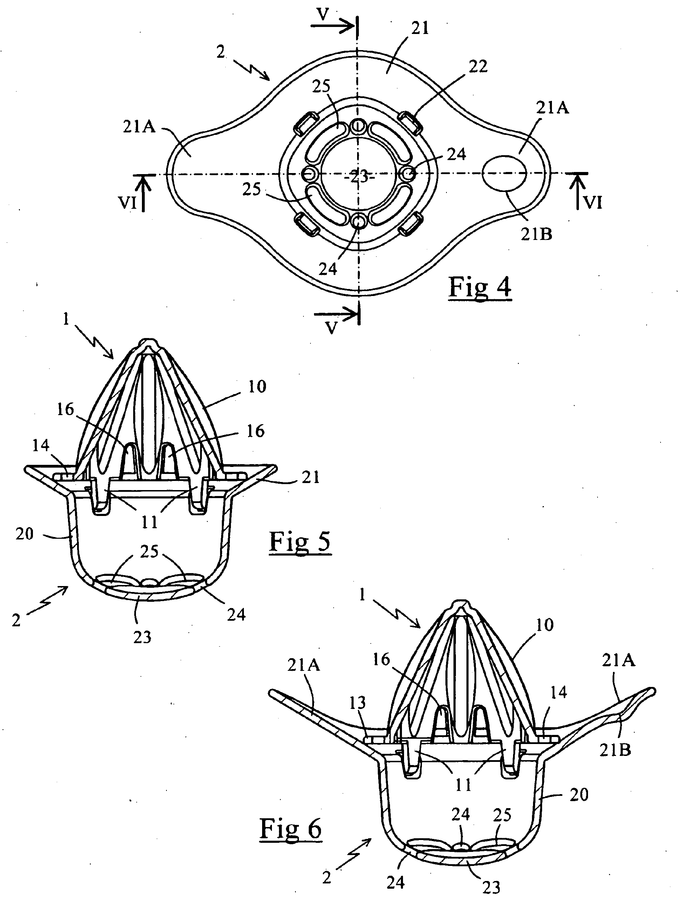

Comme on peut bien le voir sur les figures 4 à 6, la cavité 20 comporte un fond arrondi comprenant, en son centre, un disque plein 23 concave formant une cavité de récupération du jaune d'oeuf, le disque 23 étant bordé d'ouvertures oblongues 25 en alternances avec des ouvertures circulaires 24 permettant l'écoulement du blanc d'oeuf au travers du fond de la cavité 20. De manière avantageuse les ouvertures oblongues 25 présentent une longueur de l'ordre de 15 mm et une largeur de 5 mm et les ouvertures circulaires 24 présentent un diamètre de l'ordre de 5 mm.

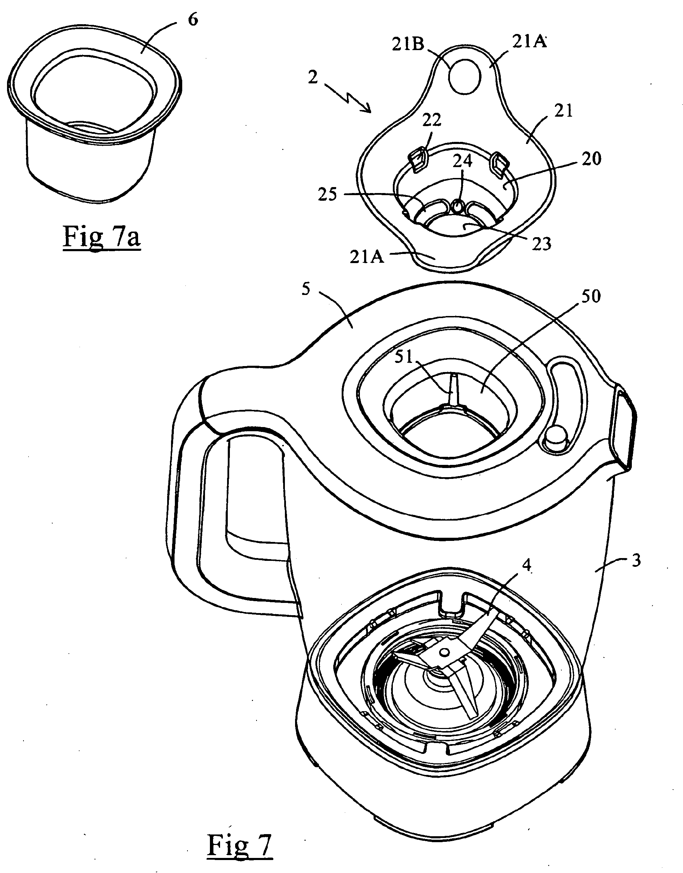

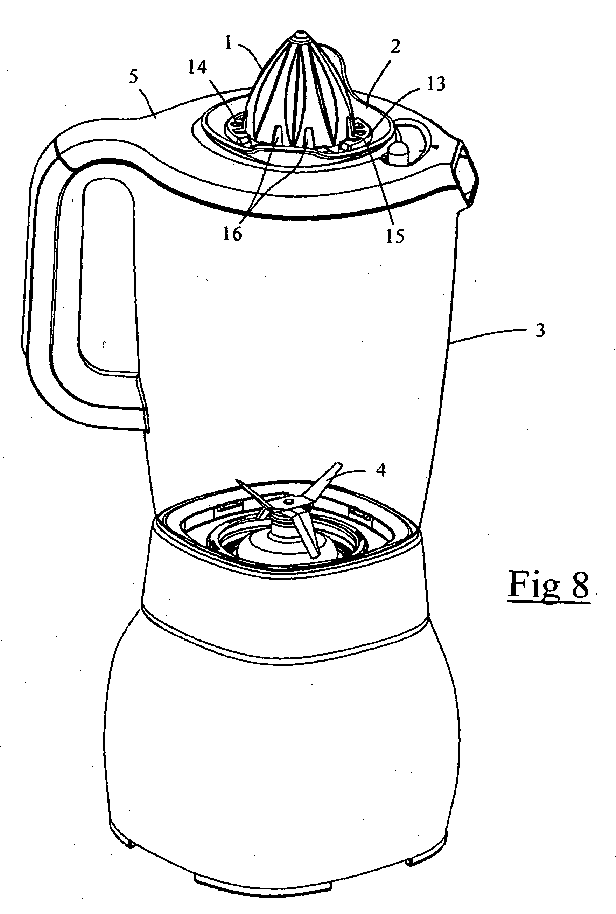

L'utilisation d'un tel accessoire va maintenant être décrite en relation avec les figures 7 et 8.

La figure 7 illustre un récipient 3 d'appareil blender renfermant un outil rotatif 4, ce récipient étant fermé par un couvercle 5 présentant une ouverture centrale 50 permettant l'insertion d'un bâton mélangeur, tel que cela est illustré dans la demande de brevet FR 2 882 640 déposée par la demanderesse. L'ouverture 50 du couvercle peut être fermée par un bouchon 6, représenté isolément sur la figure 7a.

Lorsque l'utilisateur souhaite utiliser l'accessoire pour séparer le blanc du jaune d'un oeuf cru, il utilise la coupelle 2 seule et la place au dessus du récipient 3 devant recevoir le blanc d'oeuf. Il casse alors l'oeuf au dessus de la coupelle 2 de sorte que le jaune d'oeuf est récupéré au fond de la cavité 20 par le disque 23 concave et le blanc d'oeuf s'écoule par les ouvertures 24, 25 en bordure du disque 23.

Cette opération peut être effectuée en plaçant directement la coupelle 2 au dessus du couvercle 5 du récipient 3, tel qu'illustré sur la figure 7, la cavité 20 de la coupelle venant s'insérer dans l'ouverture 50 du couvercle 5 de sorte que le blanc d'oeuf est récupéré dans le récipient 3 de l'appareil. De manière préférentielle, la cavité 20 de la coupelle présente une forme complémentaire de l'ouverture 50 du couvercle, cette dernière présentant avantageusement des bossages 51 contre lesquels vient s'immobiliser la paroi extérieure de la cavité 20.

La figure 8 illustre un appareil blender muni du récipient de la figure 7 fermé par un couvercle équipé de l'accessoire selon l'invention dans sa configuration presse-agrume.

Conformément à cette figure, le cône 1 presse-agrumes est accouplé à la coupelle 2 qui est placée sur le couvercle 5 en insérant la cavité 20 dans l'ouverture 50 du couvercle 5.

L'utilisateur qui souhaite introduire un jus dans le récipient 3, tel que du jus de citron, n'a alors qu'à presser l'agrume sur le cône 1. Le jus s'écoulant le long du cône 1 est alors recueilli par la paroi collectrice 21 de la coupelle puis s'écoule, par les ouvertures 14, 15 de la grille de filtration 13 du cône, au travers de la cavité. Le liquide présent dans la cavité 20 s'écoule ensuite dans le récipient 3 par les ouvertures 24, 25 du fond de la cavité 20.

De cette manière, la pulpe et les éventuels pépins produits par le pressage de l'agrume sont filtrés par les ouvertures 14, 15 de la grille de filtration 13 du cône et du fond de la cavité 20.

Lorsque l'utilisateur a fini de presser l'agrume, il lui suffit de retirer la coupelle 2 puis de fermer l'ouverture 50 du couvercle 5 au moyen du bouchon 6 pour pouvoir faire fonctionner l'appareil blender sans risque de projection au travers du couvercle 5.

L'accessoire ainsi réalisé présente donc l'avantage d'être très compact et de pouvoir être utilisé sur un couvercle comportant une simple ouverture, cette dernière pouvant être facilement fermée par un bouchon.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi la forme de la coupelle et les moyens de fixations du cône pourront varier d'un mode de réalisation à l'autre.

## Revendications

1. Accessoire combinant un dispositif presse-agrumes et un dispositif pour séparer le blanc et le jaune d'oeuf cru, ledit accessoire étant prévu pour être utilisé au dessus d'un récipient de travail (3) et comportant un cône (1) presse-agrumes monté de manière amovible sur une coupelle (2) pour collecter le jus, la coupelle (2) comportant une cavité (20) dont le fond est muni d'ouvertures (24, 25) présentant une forme adaptée pour retenir le jaune et laisser s'écouler le blanc d'un oeuf, sorti de sa coquille, qui serait renversé dans la cavité (20), **caractérisé en ce que** lesdites ouvertures (24, 25) sont disposées au fond de la cavité (20) en bordure d'un disque (23) concave formant un creux de récupération du jaune d'oeuf et **en ce que** la coupelle (2) présente une forme adaptée pour que le jus collecté par ladite coupelle (2) lors du pressage d'un agrume s'écoule dans la cavité (20) de séparation du blanc et du jaune d'oeuf, les ouvertures (24, 25) permettant l'écoulement du jus vers le récipient de travail (3).

2. Accessoire selon la revendication 1, **caractérisé en ce qu'**il est destiné à être disposé sur un couvercle (5) de fermeture du récipient de travail (3) et **en ce que** ledit couvercle (5) comporte une ouverture (50) dans laquelle la cavité (20) de la coupelle peut être introduite de sorte que la coupelle (2) repose sur les bords de l'ouverture (50).

3. Accessoire selon l'une quelconque des revendications 1 à 2, **caractérisé en ce que** le cône (1) presse-agrumes est disposé au dessus de la cavité (20) et vient masquer cette dernière.

4. Accessoire selon l'une quelconque des revendications 1 à 3, **caractérisé en ce que** la coupelle (2) pour collecter le jus comporte une paroi collectrice (21) s'étendant en bordure du bord supérieur de la cavité (20) et convergeant vers ladite cavité (20).

5. Accessoire selon la revendication 4, **caractérisé en ce que** ladite paroi collectrice (21) comporte des excroissances latérales (21 A) formant des poignées facilitant la préhension de l'accessoire.

6. Accessoire selon l'une quelconque des revendications 1 à 5, **caractérisé en ce que** la paroi collectrice (21) comporte au moins une cavité (21 B) dont le volume est calibré pour servir de cuillère de dosage.

7. Accessoire selon l'une quelconque des revendications 1 à 6, **caractérisé en ce que** le cône (1) presse-agrumes comporte des doigts de verrouillages (11) qui s'engagent de manière élastique dans des logements (22) prévus sur la coupelle (2).

8. Accessoire selon l'une quelconque des revendications 1 à 7, **caractérisé en ce que** le cône (1) comporte des ouvertures (15) s'étendant au moins partiellement sur la base du cône (1) de manière à favoriser l'écoulement du jus vers la cavité (20).

9. Accessoire selon l'une quelconque des revendications 1 à 8, **caractérisé en ce que** le cône (1) presse-agrumes comporte une collerette (13) partant de la base du cône (1) et s'étendant radialement à l'axe du cône, cette collerette (13) servant de butée axiale en prenant appui sur la paroi (21) de la coupelle en bordure de la cavité lorsqu'un agrume est pressé sur le cône (1).

10. Accessoire selon la revendication 9, **caractérisé en ce que** ladite collerette (13) est munie d'orifices (14,15).

11. Accessoire selon l'une quelconque des revendications 1 à 10, **caractérisé en ce que** lesdites ouvertures (24, 25) sont constituées par des ouvertures circulaires (24) en alternance avec des ouvertures de forme oblongue (25).

12. Appareil électroménager de préparation culinaire de type blender comportant un récipient de travail (3) dont le fond comprend un outil (4) entraîné en rotation par un moteur, ledit récipient (3) étant fermé par un couvercle (5) comportant une ouverture (50), **caractérisé en ce qu'**il comporte un accessoire selon l'une quelconque des revendications 1 à 11.

## Claims

1. Accessory combining a citrus press device and a device for separating raw egg whites and yolks, said accessory being designed for use above a working container (3) and comprising a citrus press cone (1) mounted removably on a cup (2) to collect the juice, the cup (2) comprising a cavity (20) the bottom of which is equipped with openings (24, 25) having a shape capable of holding the yolk of an egg removed from its shell and tipped into the cavity (20) and letting the white run through, **characterised in that** said openings (24, 25) are arranged at the bottom of the cavity (20) around a concave disc (23) forming an egg yolk collecting hollow and **in that** the cup (2) has a shape designed so that the juice collected by said cup (2) when a citrus fruit is pressed runs into the egg white and yolk separating cavity (20), the openings (24, 25) allowing for the flow of the juice towards the working container (3).

2. Accessory according to claim 1, **characterised in that** it is intended to be arranged on a lid (5) closing the working container (3) and **in that** said lid (5) comprises an opening (50) into which the cavity (20) of the cup can be inserted so that the cup (2) is resting on the edges of the opening (50).

3. Accessory according to any one of claims 1 to 2, **characterised in that** the citrus press cone (1) is arranged above the cavity (20) and conceals it.

4. Accessory according to any one of claims 1 to 3, **characterised in that** the cup (2) to collect the juice comprises a collecting wall (21) extending around the upper edge of the cavity (20) and converging on said cavity (20).

5. Accessory according to claim 4, **characterised in that** said collecting wall (21) comprises lateral extensions (21 A) forming handles facilitating the gripping of the accessory.

6. Accessory according to any one of claims 1 to 5, **characterised in that** the collecting wall (21) comprises at least one cavity (21 B) the volume of which is calibrated for use as a measuring spoon.

7. Accessory according to any one of claims 1 to 6, **characterised in that** the citrus press cone (1) comprises locking fingers (11) that engage flexibly in recesses (22) provided on the cup (2).

8. Accessory according to any one of claims 1 to 7, **characterised in that** the cone (1) comprises openings (15) extending at least partly over the base of the cone (1) in such a way as to promote the flow of juice towards the cavity (20).

9. Accessory according to any one of claims 1 to 8, **characterised in that** the citrus press cone (1) comprises a collar (13) starting at the base of the cone (1) and extending radially to the axis of the cone, such collar (13) acting as an axial stop, resting on the wall (21) of the cup around the cavity when a citrus fruit is pressed on the cone (1).

10. Accessory according to claim 9, **characterised in that** said collar (13) is equipped with orifices (14, 15).

11. Accessory according to any one of claims 1 to 10, **characterised in that** said openings (24, 25) are made up of circular openings (24) alternating with oblong openings (25).

12. Electric household food-preparation appliance of a blender type, comprising a working container (3) the bottom of which comprises a tool (4) driven in rotation by a motor, said container (3) being closed with a lid (5) comprising an opening (50), **characterised in that** it comprises an accessory according to any one of claims 1 to 11.

## Patentansprüche

1. Zubehör mit einer Kombination aus Zitruspressvorrichtung und einer Vorrichtung zum Trennen von Eiweiß und Dotter eines rohen Eis, wobei das Zubehör vorgesehen ist, um auf einem Arbeitsbehälter (3) verwendet zu werden, und wobei es einen Presskegel (1) umfasst, der abnehmbar auf einer Schale (2) befestigt ist, um den Saft zu sammeln, wobei die Schale (2) eine Aushöhlung (20) umfasst, deren Boden mit Öffnungen (24, 25) ausgestattet ist, die eine Form aufweisen, die angepasst ist, um den Dotter zurückzuhalten und das Eiweiß eines Eis abfließen zu lassen, das aufgeschlagen in die Aushöhlung (20) gegeben wird, **dadurch gekennzeichnet, dass** die Öffnungen (24, 25) am Boden der Aushöhlung (20) am Rand einer konkaven Scheibe (23) angeordnet sind, die eine Vertiefung zum Auffangen des Eidotters bildet, und dadurch, dass die Schale (2) eine Form aufweist, die so angepasst ist, dass der von der Schale (2) beim Pressen einer Zitrusfrucht gesammelte Saft in die Aushöhlung (20) zur Trennung von Eiweiß und Dotter abfließt, wobei die Öffnungen (24, 25) das Abfließen des Saftes in den Arbeitsbehälter (3) ermöglichen.

2. Zubehör nach Anspruch 1, **dadurch gekennzeichnet, dass** es dazu bestimmt ist, auf einem Deckel (5) zum Verschließen des Arbeitsbehälters (3) angeordnet zu werden, und dadurch, dass der Deckel (5) eine Öffnung (50) umfasst, in die die Aushöhlung (20) der Schale eingesetzt werden kann, so dass die Schale (2) auf den Rändern der Öffnung (50) aufliegt.

3. Zubehör nach einem der Ansprüche 1 bis 2, **dadurch gekennzeichnet, dass** der Presskegel (1) über der Aushöhlung (20) angeordnet ist und diese Letztere abdeckt.

4. Zubehör nach einem der Ansprüche 1 bis 3, **dadurch gekennzeichnet, dass** die Schale (2) zum Sammeln des Saftes eine Sammelwand (21) umfasst, die sich am Rand der Oberkante der Aushöhlung (20) erstreckt und in Richtung Aushöhlung (20) zusammenläuft.

5. Zubehör nach Anspruch 4, **dadurch gekennzeichnet, dass** die Sammelwand (21) seitliche Fortsätze (21 A) umfasst, die Griffe bilden, welche das Ergreifen des Zubehörs erleichtern.

6. Zubehör nach einem der Ansprüche 1 bis 5, **dadurch gekennzeichnet, dass** die Sammelwand (21) mindestens eine Aushöhlung (21 B) umfasst, deren Volumen bemessen ist, um als Dosierlöffel zu dienen.

7. Zubehör nach einem der Ansprüche 1 bis 6, **dadurch gekennzeichnet, dass** der Presskegel (1) Verriegelungszapfen (11) umfasst, die auf elastische Weise in Aussparungen (22) eingreifen, die auf der Schale (2) vorgesehen sind.

8. Zubehör nach einem der Ansprüche 1 bis 7, **dadurch gekennzeichnet, dass** der Kegel (1) Öffnungen (15) umfasst, die sich mindestens teilweise auf dem Ansatz des Presskegels (1) erstrecken, um das Abfließen des Saftes in die Aushöhlung (20) zu begünstigen.

9. Zubehör nach einem der Ansprüche 1 bis 8, **dadurch gekennzeichnet, dass** der Presskegel (1) einen Kragen (13) umfasst, der vom Ansatz des Kegels (1) ausgeht und sich radial zur Kegelachse erstreckt, wobei dieser Kragen (13) als axialer Anschlag dient, indem er auf der Wand (21) der Schale am Rand der Aushöhlung aufliegt, wenn eine Zitrusfrucht auf den Kegel (1) gepresst wird.

10. Zubehör nach Anspruch 9, **dadurch gekennzeichnet, dass** der Kragen (13) mit Öffnungen (14, 15) ausgestattet ist.

11. Zubehör nach einem der Ansprüche 1 bis 10, **dadurch gekennzeichnet, dass** die Öffnungen (24, 25) abwechselnd von kreisrunden Öffnungen (24) und Öffnungen mit länglicher Form (25) gebildet werden.

12. Elektrohaushaltsgerät für kulinarische Zubereitungen, von der Art eines Standmixers, umfassend einen Arbeitsbehälter (3), dessen Boden ein Werkzeug (4) aufweist, das von einem Motor in Drehung versetzt wird, wobei der Behälter (3) von einem Deckel (5) verschlossen wird, der eine Öffnung (50) aufweist, **dadurch gekennzeichnet, dass** es ein Zubehör nach einem der Ansprüche 1 bis 11 umfasst.
